**Europäisches Patentamt**

**European Patent Office**

**Office européen des brevets**

(11) Veröffentlichungsnummer: **0 363 511**
**A1**

## (12) EUROPÄISCHE PATENTANMELDUNG

(21) Anmeldenummer: **88116991.6**

(22) Anmeldetag: **13.10.88**

(51) Int. Cl.5: **A01D 46/24**

Geänderte Patentansprüche gemäss Regel 86 (2) EPÜ.

Die Bezeichnung der Erfindung wurde geändert (Richtlinien für die Prüfung im EPA, A-III, 7.3).

(43) Veröffentlichungstag der Anmeldung:
**18.04.90 Patentblatt 90/16**

(84) Benannte Vertragsstaaten:
**CH DE IT LI**

(71) Anmelder: **Huf, Winfried**
**Bahnhofstrasse 20**
**I-39040 Auer/Ora(IT)**

(72) Erfinder: **Huf, Winfried**
**Bahnhofstrasse 20**
**I-39040 Auer/Ora(IT)**

(54) **Fahrzeug mit Doppelantriebslenkung und spezielle Fördereinheiten in Anwendung der Ernte-Support-Serie für den modernen Obstbau.**

(57) Die Ernte-Supporte sind eine Gruppe von etwa neun Ernte-Kleinfahrzeugen, die die Erntearbeit im Obstbau rationalisieren und erleichtern sollen.

Fortschritte:

Eine der zu den verrichtenden Handarbeiten angemessene Anwendung des solarunterstützten Elektroantriebes an landwirtschaftlichen Fahrzeugen.

Die daraus folgende Beschränkung auf den Einsatz energiesparender fast ausschließlich mechanisch-automatischen Hub-Fördervorrichtungen.

Die verschiedenen Hub-Fördervorrichtungen sind im Grunde so konzipiert, daß das Leergut vorne aufgenommen, hinten gefüllt abgegeben wird. Dies ermöglicht die vorteilhafte Arbeitsdreiteilung von Leergutverteilung-Erntearbeit-Obsttransport.

Mit den Fahrzeugen kann man sowohl in normalen Kassetten ernten, als auch in Großkisten mittels praktischer Ernte-Klappenkassetten (Fig. 1, 2), die reibungsloseres Umleeren ermöglichen (Ausnahme Modell ES-IVC mit Großkisten-Direktfüllungseinrichtung (Fig. 10).

Wesentliche Merkmale: getrennter Hinterradantrieb (20), Vorderräder frei um die Vertikalachse drehbar (5) extremwendige Drehzahldifferenze-Lenkung, Dreiecks- oder Trpaezaufbau (6, 53), einholbares Sonnenzellendach (7, 8, 9, 10).

Fig. 2

Fig. 10

Das Ernte-Support ist ein Gerät, welches die Erntearbeit im Obstbau rationalisiert und erleichtert.

Ganz allgemein unterscheidet sich das Ernte-Support von der herkömmlichen Erntewägen am Fehlen größerer Ernte-Plattformen, den insgesamt kleineren Ausmaßen und dem geringeren Gewicht (einfach transportierbar, überwiegend leicht schiebbar), dem Elektroantrieb mit Solarenergieunterstützung (Teil-Solarantrieb mit Hilfe eines ausrollbaren Sonnenzellendaches), der Drehzahldifferenz-Lenkung und in den nachfolgend erläuterten großteils mechanisch-automatisierten Erntevorrichtungen, die jeweils ein spezielles Ernteprogramm erlauben.

Im Unterschied zum hydraulischen Ernteliftkran-Prinzip bedarf das Ernte-Support während des Betriebes keine ständig laufende Träger- und Antriebsmaschine - ist also traktorunabhängig. Allerdings ist das Ernte Support ein für moderne Anlagen (Spalier, Spindel, max. Pflanzenhöhe etwa 3 m) spezialisiertes System-Fahrzeug, das begrenzt hanglagentüchtig ist.

Die Geräte sind neben dem Ernteeinsatz auch für den Baumschnitt oder sonstige Pflegemaßnahmen geeignet.

Die breit gefächerte Serie der Ernte-Supporte ermöglicht ein dementsprechend weites Preisniveauangebot.

Übersichts- und vollständigkeitshalber ist die ganze Reihe angeführt, wobei die wesentlichsten Merkmale hervorgehoben sind.

Übersicht:

Symbolerläuterung:

ES Ernte-Support, I Ordnungszahl, A mit schmaler Erntekassettenanordnung, B mit breiter Erntekassettenanordnung, S mit Seilabtriebsförderung mittels spezieller Ernte-Klappenkassette, F mit Förderbandhilfe, C mit Großkisten-Direkteinfüllung.

Variationsbeispiele:

1. ES-IA: Grundmodell, für 1 bis 2 Personen, Fassungsvermögen: 18 Erntekassetten, zum Schieben, motorisierbar.

2. ES-IIA: für 2 bis 3 Personen, Zu- und Abfuhrvorrichtung für die Erntekassetten (Grundausstattung der II.er und III.er Reihe), zum Schieben, motorisierbar.

3. ES-IIAS: zusätzlich mit Seilabtriebsvorrichtung

4. ES-IIIA +

5. ES-IIIB: für 4 bis 5 Personen, Zu- und Abfuhrvorrichtung, motorisiert, schiebbar.

6. ES-IIIAS: zusätzlich mit Seilabtriebsvorrichtung

7. ES-IIIBF: zusätzlich mit Förderbandhilfe

8. ES-IIIAB: doppelte Zu- und Abfuhrvorrichtung kombiniert, beides vorne angebracht, ersetzt das Förderband.

9. ES-IVC: für 4 Personen, Zu- und Abfuhrvorrichtung für die Großkisten, Erntevorrichtungen (2 Ernte-Becherförderwerke und 2 Ernteschächte), motorisiert. Die dritte und fünfte Person gilt als Entleerer der Ernte-Klappenkassetten in Großkisten.

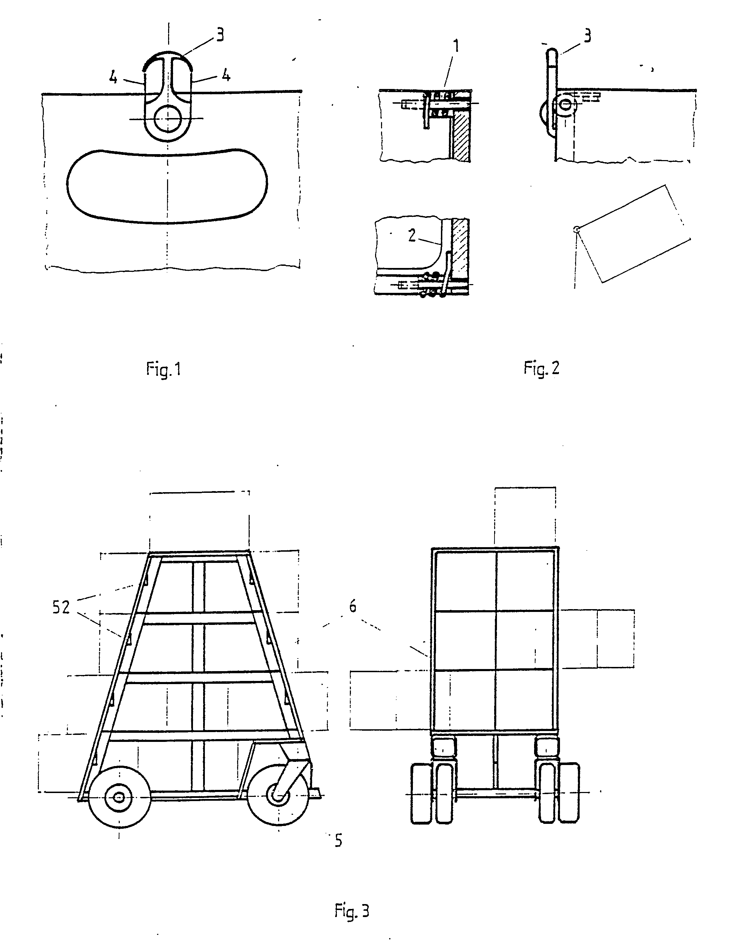

Die Ernte-Klappenkassette (Fig. 1, 2):

Sollte mit den ES-Geräten I, II, III in Großkisten geerntet werden, stünden hierfür eigene Erntekassetten zur Verfügung. Sie brauchen vom Erntenden nicht wie beim herkömmlichen Erntekorb um die Schulter getragen werden und lassen sich zudem einfacher und schneller entleeren. Sie unterscheiden sich von den normalen Erntekassetten durch eine mit der Schwerkraft des Erntegutes sich öffnende Seitenwand (Klappe). Bei einer bestimmten Neigung bzw. Belastung öffnet sich die Seitenwand unten, wobei das sich Öffnen zusätzlich von der haltenden Hand dirigiert werden kann. Die Öffnung wird durch ein Federscharnier (1) gehemmt. In der vollen Tiefe der Seitenwand kann innen ein ringförmiges Stoffband (2) befestigt sein, das die anderen Seitenwände bedeckt. Die Innenflächen könnten auch schaumgummiverkleidet sein. An den schmäleren Seitenwänden oben können sogenannte Zweiweg-Doppelkarabiner (3) festgemacht werden. "Zweiweg" deshalb, weil die Blattfedern (4) eine direkte (ohne zusätzlichen Handgriff) Ein- und Ausklinkung erlauben. Sie erleichtern das Ein- und Auskoppeln am Seilabtrieb.

Das Fahrzeug:

Das Fahrwerk des ES-Gerätes besteht aus zwei in vertikaler Achse sich frei drehbaren Rädern (5) vorne und - wenn motorisiert - aus zwei unabhängig voneinder angetriebenen Rädern hinten. Der Doppelantrieb (20) (einmotorig - über einem automatischen Doppelschaltgetriebe) ermöglicht die extremwendige Lenkung durch differenzierten Antrieb (Drehzahldifferenz-Lenkung).

Der Aufbau (dreiecks- oder trapezförmig in Leichtbauweise) (6, 53) nimmt eine oder zwei Personen auf, Leergut, unterschiedliche Zu- und Abfuhrvorrichtungen und den vom Gerüst sich fortsetzenden Dachständer (7), der den Rahmen (8) des Sonnenzellendaches schwenkbar führt. Die Sonnenzellenfolie (ca. 3 m² - 7 m²) (9) ist auf einer spiralfederangezogenen Rolle (10) aufgerollt. Sie ladet im ausgerollten Zustand die Akkumulatoren, deren Energievorrat dadurch gestreckt wird. Die Akkumulatoren sind einfach ein- und aussetzbar und könnten - wenn sich eine zusätzliche Akku- und Sonnenzellenausrüstung preislich lohnen sollte - gleich vor Ort ausgetauscht und nachgeladen werden.

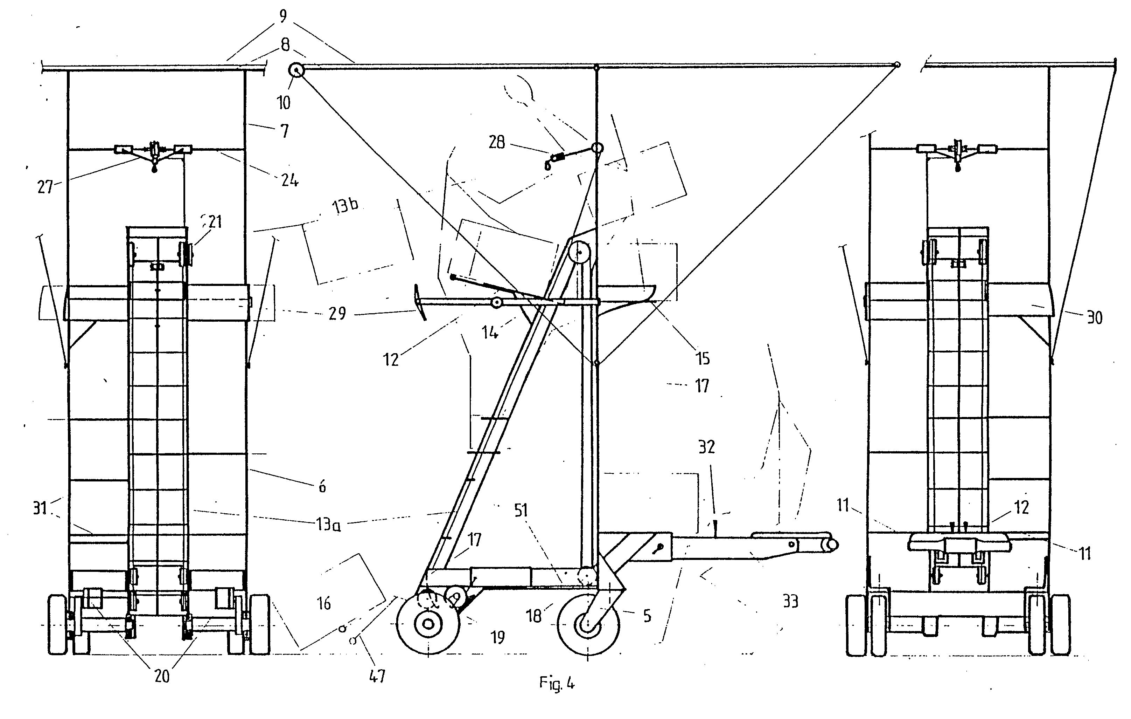

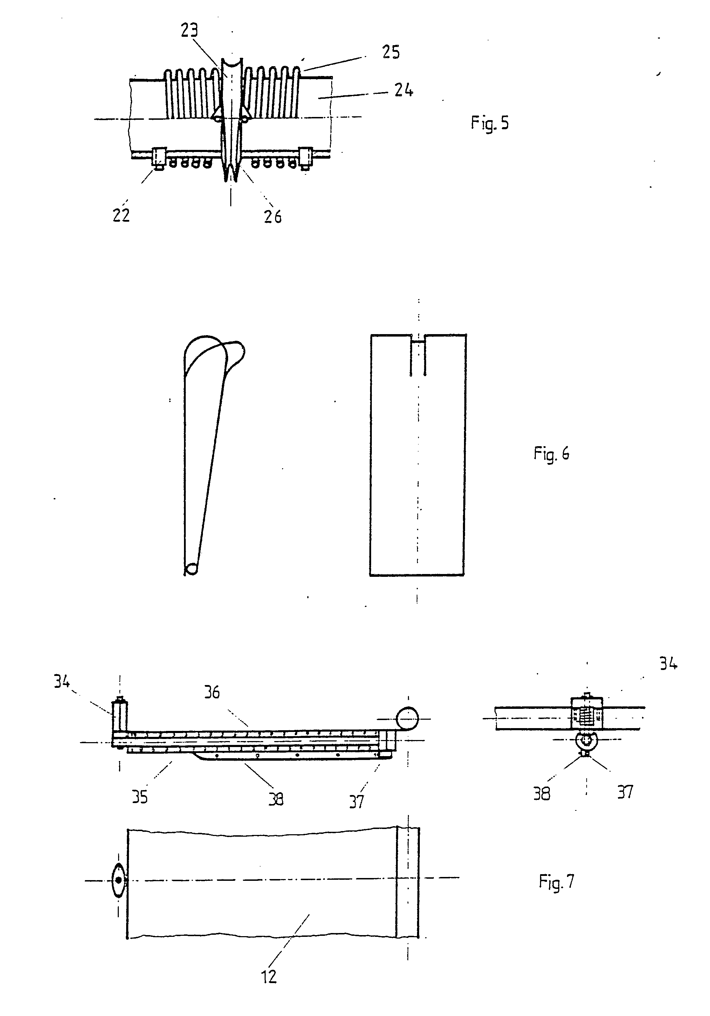

Die einfach kombinierte Zu- und Abfuhrvorrichtung (Grundausstattung für ES-II, ES-III, Fig. 4, 7):

Einen der Hauptmerkmale des ES-Betriebes ist die Aufnahme des Leergutes von vorne, sodaß das Leergut von vorne herein verteilt werden kann, ohne daß es im Wege steht oder Zu- und Abfuhr sich kreuzen.

Beispiel des ES-Betriebes an den Modellen IIIA, IIIB:

In Fahrtrichtung steht das Leergut bereit. Die niedersten Astpartien (Kniehöhe), sofern ausreichend vorhanden, werden gebückt oder in Hocke - die Erntekassette am Boden - abgeerntet. Die Kassetten der mittleren Erntepartien (Hüfte-Kopfhöhe) werden links und rechts auf die Standkonsolen (11) gestellt. Diese Erntearbeiter führen das ES-Gerät und versor gen die Erntenden darüber mit Erntekassetten durch den Lift-Support (12), der sich zwischen der linken und rechten Konsole befindet. An der Hinterseite des Fahrzeuges setzt sich der andere Teil des Lifts fort, der mit dem vorderen über eine Seilbahn (13) gekoppelt ist. Die zwei Konsolen (14) oben sind wie die vorne unten angeordnet. Eine dritte vor der rechten Konsole (15) ist für eine Reservekassette gerechnet. (Die Konsolen können höhen-, drehverstellbar und drehgefedert neigbar gelagert sein).

Dann sobald einer der beiden Erntearbeiten oben die Erntekassette gefüllt hat, schiebt er sie von der Seite zur Mitte auf das Support, das sie nach unten bringt und am Boden absetzt (16). Die Stützführung (17) unterhalb des Supports ändert funktionsmäßig dessen Neigung. Gleichzeitig zieht das vordere Support eine Kassette nach oben, die der Erntearbeiter zu seiner Konsole stellt und die Pflückarbeit fortsetzt. Sobald des hintere Support sich entlastet hat, zieht die Federtrommel vorne (18) die Seilbahn in die ursprüngliche Lage. (Die beiden Federtrommeln könnten eventuell mittels durchgehend verbundener Seilbahn ersetzt werden, wenn am vorderen Support ein kleines Gewicht montiert wird.) Das hintere Support steigt wieder auf, das vordere sinkt nach unten, auf dem dann von der Seite her eine (bereits angefangene) Erntekassette geschoben wird. Das vordere Support muß immer besetzt sein, damit der Nachschub für die obere Erntearbeiten jederzeit gedeckt ist. Die oben angefüllten Erntekassetten könnten auch vorne abgegeben werden. In diesem Falle müßte der Federtrieb der hinteren Trommel (19) kräftiger sein oder am hinteren Support ein entsprechendes Gewicht montiert sein. Sobald die gefüllte Kassette unten weggehoben wird, würde das beschwerte Support bzw. die hintere Trommel das vordere Support nach oben ziehen.

Die Seilabtriebsvorrichtung (Fig. 4):

Dafür lagert - diesmal in Fahrzeughöhe - eine weitere Spiralfedertrommel (21), auf der biz zu 20 m dünnes Stahlseil (22) aufgerollt ist. Am Ende des Seiles ist ein Karabiner befestigt. Bevor das Seil zur Bahn auszieht läuft es über eine sogenannte Durchlaufsperre (Fig. 5), die auf der Dachständersprosse (24) angebracht ist. Die Durchlaufsperre ist eine Rolle (Bremsrolle 23), die beidseitig drehfedergehemmt ist und vor der Seilauflage mit einem Bremsgang (26) versehen ist. Die Durchlaufsperre läßt eine gleichförmig leichte Seilbahnverlängerung zu und hemmt diese durch abrupt ansteigende Belastung - in diesem Falle durch die gefüllten Erntekassetten. Die durch das belastete Seil entstehende Reibung auf der Rollenlauffläche dreht diese in Belastungsrichtung, wobei das Seil in den Bremsgang (26) kommt und dessen Durchlaufen verhindert.

Weiters lagert auf der Dachständersprosse eine dreh- und feststellbare Seilführung (27) die der Seilbahn die Richtung nach hinten oder vorne gibt und das Zurückrollen der Seilbahn an ihrem Führungsstück (28) abstoppt.

Wie bereits erwähnt trägt die Seilabtriebsvorrichtung zu einer schnelleren und arbeitskraftsparenden Verbindung zwischen Gerät und Großkiste bei. Mit Hilfe der Zweiweg-Doppelkarabiner lassen sich die Ernte-Klappenkassetten (Fig. 1, 2) leicht auf die Bahn ein und aushängen. Das Seil wird mittels Blattfederklammer (Fig. 6) an die jeweils zu füllende Großkiste befestigt. Am letzten Seilmeter können Bremsstreifen (von einem Textilklebeband) aufgeklebt sein.

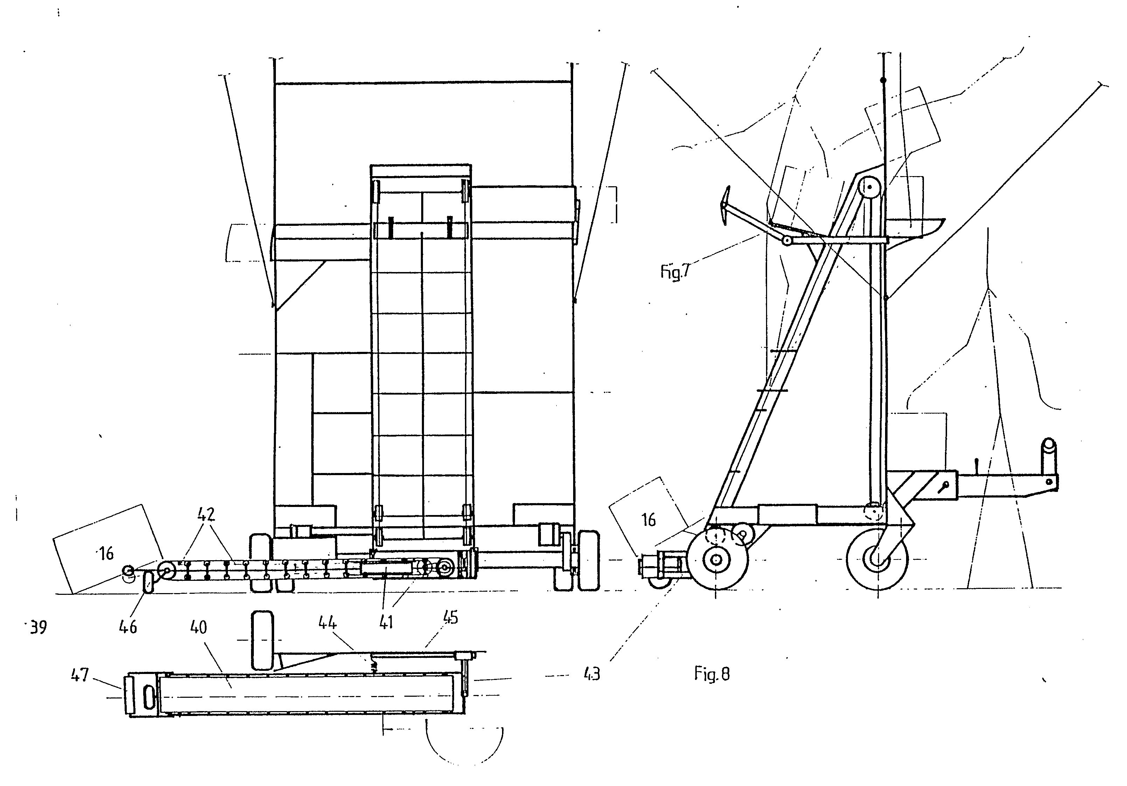

Die Förderbandhilfe (Fig. 8):

Mit der einfach kombinierten Zu- und Abfuhrvorrichtung landen die gefüllten Erntekassetten (39) inmitten der Fahrgasse. Mit dem Förderband lassen sich zwei Vorteile nützen:

1. Es hält die Fahrgasse für das eventuell spätere Verladen bei herkömmlichen Kassetten frei.

2. Bei der Ernte mit Großkisten bzw. Klappenkassetten befördert es die letzteren in eine der seitlichen Baumreihen. Bei diesem Ernteverfahren liegen die Großkisten auf der benachbarten Fahrgasse in Förderbandrichtung. Durch das Förderband braucht man beim Entleeren nicht die Fahrspur wechseln oder mit den gefüllten Klappenkassetten durch die Baumreihen schleifen. Nach dem Entleeren gibt sie der Arbeiter den am Boden Erntenden vorne wieder durch die Baumreihe weiter.

Version B/BF trägt am hinteren Kassettensupport zusätzlich zwei einstellbare Kassettenführungen (Fig. 7), die es erlauben die Kassetten in einer bestimmten Querstellung auf den Boden oder auf das Förderband (39) abzustellen. Das Aufsetzen der gefüllten Kassette schließt den Kontakt in der Unterbrecher-Schaltleitung unterhalb des Laufbandes (40), die den Motor (41) mit dem Akkumulator verbindet. Bei Entlastung löst sich der Kontakt wieder. Motor und Akku sind ebenfalls im Förderband integriert. Das Förderband lagert drehbar auf einem Arm (43) der am Fahrzeug geführt ist. Die Zugfedern (44) links und rechts der Führung (45) halten das Förderband an der einen oder anderen Seite des Fahrzeuges. Die Außenseite des Förderbandes hält ein Rad (46) über den Boden. Ein Schwenkbügel mit Rolle (47) läßt die Erntekassette weitergleiten.

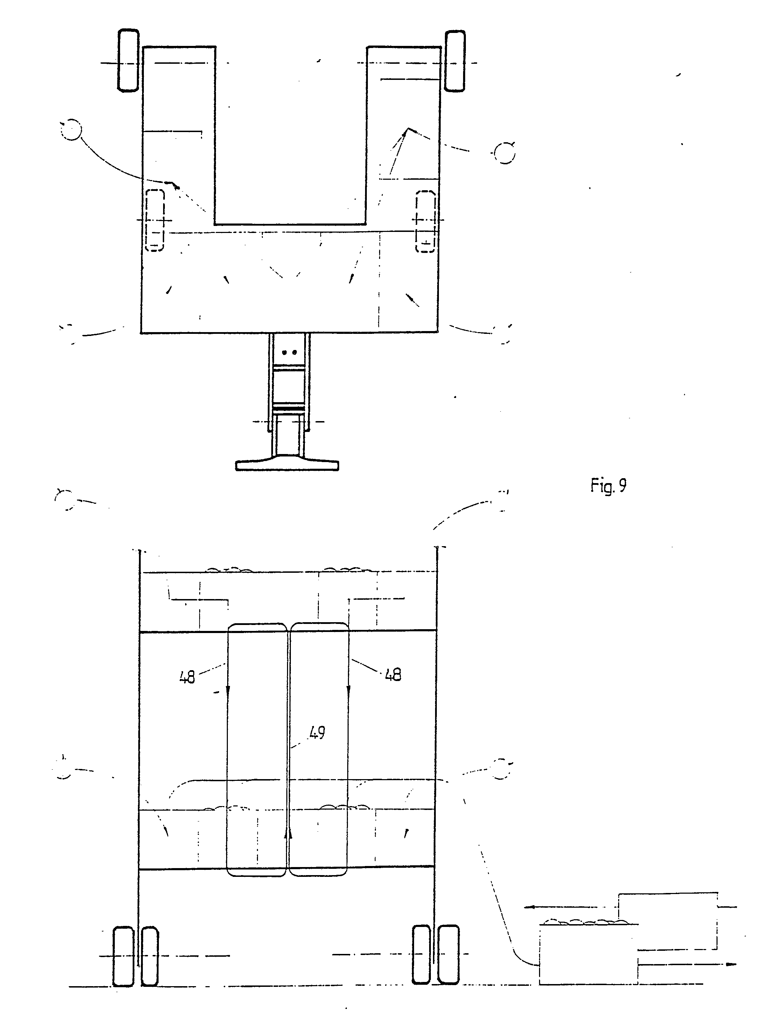

Die doppelt kombinierte Zu- und Abfuhrvorrichtung (Fig. 9):

Der Förderbandzusatz kann durch das Modell IIIAB mit doppelt kombinierter Zu- und Abfuhrvorrichtung eingespart werden. Die auf dem Boden stehenden Erntearbeiter übernehmen dabei die Arbeit des Förderbandes. Zwei parallele angeschlossene Liftbahnen sind vorne angeordnet. Es entstehen drei Bahnen: die beiden äußeren (48) befördern die gefüllten Erntekassetten nach unten, die innere Bahn (49) hebt das Leergut. Es versteht sich von selbst, daß das innere Support lose unabhängig von den beiden Nachbarbahnen geführt sein muß; auf den Bahnen jeweils ein Mitnehmerkeil unterhalb des Supportes angebracht ist. Die beiden äußeren Supporte können auf den Bahnen fixiert sein.

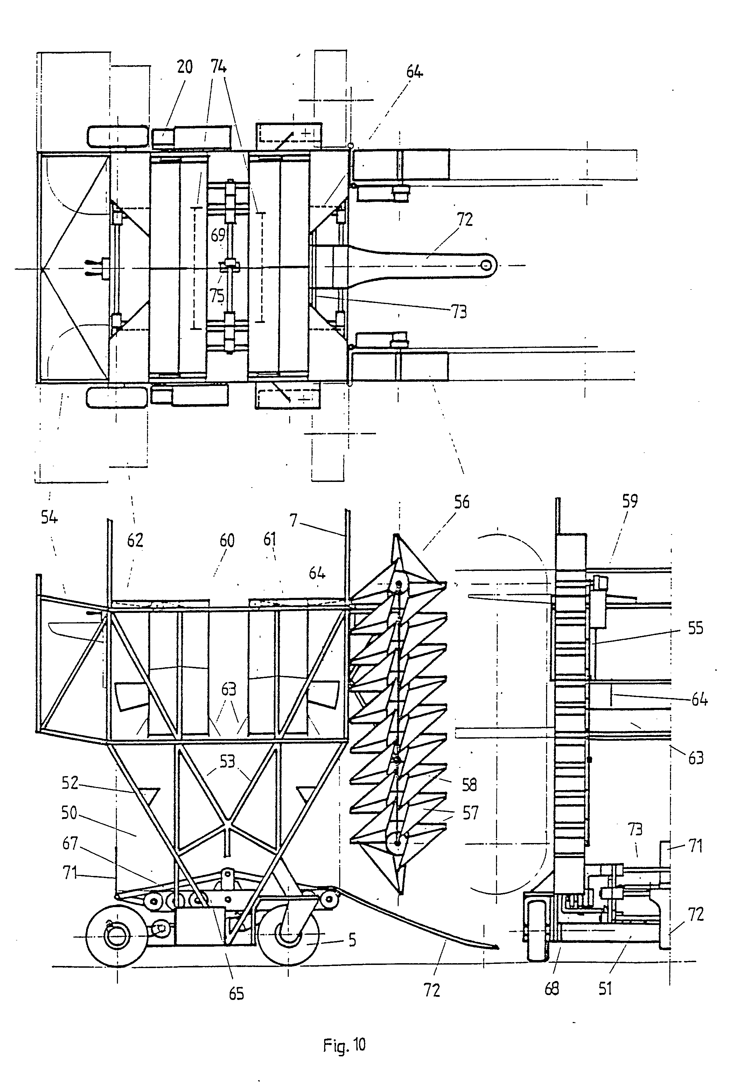

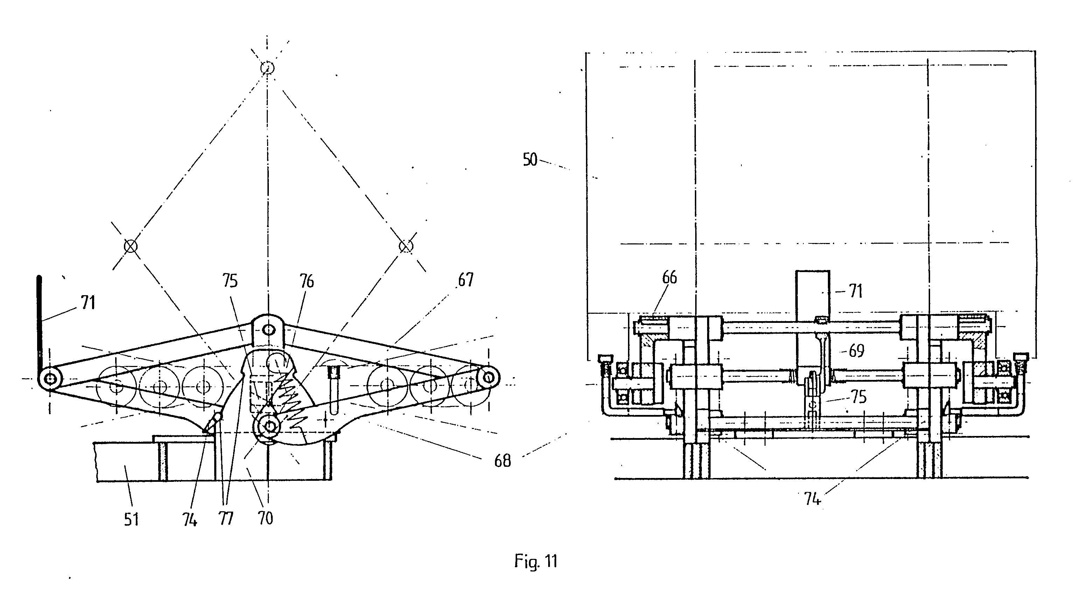

Das Modell ES-IVC (Fig. 10, 11):

Im Prinzip wird hier dasselbe Ernteverfahren angewendet wie bei den übrigen Geräten, nur das anstelle der Erntekassetten die Großkisten (50) aufgenommen werden. Das erfordert einen kräftigeren Antrieb (20). Die Steuerung wird auf die Fahrzeugbrücke verlegt.

Das Fahrzeuggestell (51) trägt zentral den Hubmechanismus. Links und rechts davon erhebt sich ein V-förmiges Gerüst (53), das sich oberhalb schließt. Es läßt damit einen tunnel- und schachtartigen Bewegungsraum für die Großkiste offen.

An der hinteren Gerüstaußenseite ist die ausbaufähige Fahrzeugbrücke (54) angeschlossen. An der vorderen Gerüstaußenseite ist links und rechts ein Führungselement (55) bis zur Kante angebracht. Sie nehmen die beiden Ernte-Becherförderwerke (56) auf. Sie sind um die Kante und von unten nach oben verstellbar. Die Seitenwände (57) und Böden (58) der Becherelemente sind aus Kunststoff. Fahrzeugbrücke, Ernte-Becherförderwerke, sowie die Dachkonstruktion sind demontierbar.

Im Gerüstinneren erstrecken sich quer vorne und hinten jeweils ein Obstschacht (60) mit stoppbaren spiralfederregulierten Senk-Schachtboden (61). Er ist zur besseren Obstverteilung entsprechend geformt. Die Berührungsart der Früchte an den Förderflächen ist durch eine dünne Schaumgummi-Verkleidung berücksichtigt. Das Obst gelangt vorne über die Becherförderwerke (56) von unten nach oben, über die Schachtbürcke (62) in die Obstschächte (60). Hinten wird das Obst auf die Schachtbrücke oder direkt in den Schacht gelegt. Die Schachtbrücken sind leicht zum Schacht hin geneigt und hinten ausziehbar. Durch die Schwerkraft des Obstes senkt sich der Boden bis zum Schachtaustritt, wo er knapp über dem Großkistenboden bzw. Obstspiegel je nach Obstförderung auf-und abschwankt, und das Obst unter den Endlappen (63) durchschlüpft.

Der Hubmechanismus.

Die Großkiste (50) liegt mit den Kufen auf ein Pendelsupport (65) aus zwei Rollenbahnen, deren Drehpunkt (66) auf dem First eines rhomboiden Hubgestänges - dem Hebebock (67) - lagert. Der hintere Pendelteil ist kürzer. Am längeren Pendelteil ist an den Rollenbahnen jeweils eine hydraulische Winkelrohrhemmung (68) eingebaut, bei der sich auf Belastung im waagrechten Rohrende das Hemmelement schiebt. Im zentralen Teil befindet sich eine Entsperrudersonde (69). (Beide Gegenelemente sind im untersten Hebebockbereich und auf dem Fahrgestell angeordnet.)

Der Hebebock (65) ist quer zur Fahrtrichtung am Fahrgestell (51) gelagert. An der hinteren Achse ist in der Mitte eine Federhemmplatte (71) angebracht, die ein zu frühes Abrollen der Großkiste verhindert. An der vorderen Achse ist die Deichsel (72) gelagert, die nach hinten weiterführt, wo sie unterhalb einer zugefederten, spannbaren Stange (73) aufliegt. Diese Vorrichtung bewirkt das Einziehen der Deichsel beim Hebevorgang. Weiters sind vier Reibführungssperrklinken (74) mit paarweiser Querverbindung angebracht, die bei Einwirkung der Entsperrudersonde (69) über die Keil-Hubstangen-Vorrichtung (75) den Hebevorgang auslösen. Den Hebevorgang leiten zwei Führungswinkel (70), die links angebracht und rechts mit den unteren Gestängeschenkelpaar des Hebebockes (67) kreuzend am Fahrgestell verankert sind. Darauf sind angebracht: jeweils ein Zugfeder- oder Stoßdämpferpaar (76), die an das Gestängeschenkelpaar unterhalb befestigt sind - beiderseitig Führungsflächen mit anschließender Sperrmulde (77). Die Führungsflächen sind nach unten zunehmend reibungsträchtiger, bezogen auf ihrer Oberflächenbeschaffenheit oder ihres wölbungslinearen Verlaufes (Toleranzabstufung). Die Sperrklinken sitzen wie bereits erwähnt an den Gestängeschenkeln paarweise querverbunden. Sie ergeben zusammen eine gewichtsbezogene Reibungssperreinheit, oder exakter definiert eine Reibführung, welche drei Aufgaben übernimmt:

1. Sie stabiliert die senkrechte Lage des Hebeblockes.

2. Sie sperrt die in den durch die Schwerkraft der Obstfüllung gespannten - Federpaaren gespeicherte Hubenenergie und gibt sie

3. wohlproportioniert nach Entriegelung durch Waagrechtheben des mit dem Leergut nachgeladenen Supportes wieder ab. (Die stoßdämpfende Funktion könnten zusätzlich zwei Federn oder Torsionstäbe mit degressiver Federkraft in den oberen oder unteren Hebebockgelenken unterstützen.)

Der Großkisten-Hubweg zusammenfassend:

Die Gleitfläche der Deichsel (72) erleichtert das Heben der Großkiste (50) vom Boden zum abwärtsgeneigten Support (65). Durch die Waagrechtstellung des Supportes lösen sich die Sperrklinken (74). Der Federstoß wird durch die Reibführung abgedämpft. Die Großkiste wird zu den Obstschächten (60) gehoben. Die zunehmende Schwerkraft des füllenden Obstes senkt den Hebebock (67) mit dem Support (65). Die beiden hydraulischen Winkelrohrhemmungen (68) wirken im letzten Senkweg auf die benachbarten Hebebockschenkeln ein, was das Support (65) nach hinten kippen läßt. Die Federhemmplatte (71) verhindert das zu frühe Abrollen der Obstkiste. Nach dem Abrollen enthemmt sich die hydraulische Winkelsperre (68). Die Federhemmplatte (71) verringert den freien Fallweg der hinteren Kistenkante bis auf etwa 10 cm nach erfolgter 0,5 m Vorwärtsfahrt. Zugleich kann die nächste leere Kiste vorne auf die Gleitflächendeichsel (72) auffahren. Inzwischen fällt das Support (65) durch ungleiche Pendelteile nach vorne, welches sich schließlich durch einen letzten Handgriff nachladen läßt.

**FIGURENÜBERSICHT:**

Fig. 1: Seitenwand der Ernte-Klappenkassette mit Zweiweg-Doppelkarabinerhaken

Fig. 2: Scharnier der beweglichen Klappenkassetten-Seitenwand

Fig. 3: Grundmodell der Erntesupport-Serie ES-IA mit den Platzmöglichkeiten der Erntekassetten

Fig. 4: Erntesupport ES-IIIAS

Fig. 5: Durchlaufsperre

Fig. 6: Großkistenklammer für den Seilabtrieb

Fig. 7: einfache oder doppelte Kassettenführung unterhalb der Liftsupporte

Fig. 8: Erntesupport ES-IIIBF

Fig. 9: Erntesupport ES-IIIAB

Fig 10: Erntesupport ES-IVC

Fig. 11: Hubmechanismus des Erntesupportes ES-IVC

**POSITIONSLISTE:**

Pos. 1: Federscharnier der beweglichen Klappenkassetten-Seitenwand

Pos. 2: Stoffband - Schaumgummiausfüllung

Pos. 3: Zweiweg-Doppelkarabiner

Pos. 4: Blattfeder

Pos. 5: in vertikaler Achse drehbare Vorderräder

Pos. 6: Aufbau

Pos. 7: Dachständer

Pos. 8: Dachrahmen

Pos. 9: Sonnenzellenfolie

Pos. 10: Dachfolienrolle

Pos. 11: untere Konsolen

Pos. 12: Liftsupport

Pos. 13: Seilbahn (a Liftseilbahn, b ausziehbare Seilbahn)

Pos. 14: obere Konsole

Pos. 15: Konsole für Reservekassette

Pos. 16: Absetz-Moment

Pos. 17: Stützführung des Liftsupports

Pos 18: vordere Federtrommel der Liftseilbahn

Pos. 19: hintere Federtrommel

Pos. 20: Doppel-Antrieb

Pos. 21: Federtrommel der Seilbahn

Pos. 22: Winkelhemmung

Pos. 23: Bremsrolle

Pos. 24: Dachständersprosse

Pos. 25: Drehfeder

Pos. 26: Bremsgang

Pos. 27: Seilführung

Pos. 28: Führungsstück

Pos. 29: Rücklehne

Pos. 30: Sessel

Pos. 31: Aufstieg

Pos. 32: Lenkung mit Bremse

Pos. 33: aus- und einziehbare Deichsel

Pos. 34: gefedertes Ruderführungsblatt

Pos. 35: Führungsstange

Pos. 36: Druckfeder

Pos. 37: Führungszapfen

Pos. 38: Führungs-Einstelleiste mit Bohrungen und einem Hemmstift für den Führungszapfen

Pos. 39: Förderband

Pos. 40: Laufband

Pos. 41: Antrieb mit Akku

Pos. 42: Unterbrecher - Schaltleitung

Pos. 43: Förderband-Arm

Pos. 44: Zugfeder

Pos. 45: Förderband-Armführung

Pos. 46: Stützrad

Pos. 47: Schwenkbügel mit Rolle

Pos. 48: äußere Liftsupportbahn

Pos. 49: innere Liftsupportbahn

Pos. 50: Großkiste

Pos. 51: Fahrzeuggestell

Pos. 52: Aufstieg, Steigwinkel

Pos. 53: Gerüstaufbau

Pos. 54: ausbaufähige Fahrzeugbrücke mit Stand- oder Sitzausführung (einfach demontierbar)

Pos. 55: Eckführung des Ernte-Becherförderwerk

Pos. 56: verstellbares Ernte-Becherförderwerk (einfach demontierbar)

Pos. 57: Becherseitenwand

Pos. 58: Becherboden

Pos. 59: Antrieb mit Akku

Pos. 60: Obstschacht

Pos. 61: stoppbarer spiralfederregulierender Senk-Schachtboden

Pos. 62: ausziehbare Schachtbrücke

Pos. 63: Obstschacht-Endlappen

Pos. 64: Großkisten-Führungspuffer

Pos. 65: Großkisten-Pendelsupport

Pos. 66: Pendelsupportkeilverbindung

Pos. 67: Hebebock

Pos. 68: hydraulische Winkelrohrhemmung

Pos. 69: Entsperrudersonde

Pos. 70: Führungswinkel

Pos. 71: Federhemmplatte

Pos. 72: Aufladedeichsel (einfach demontierbar)

Pos. 73: Spannstange

Pos. 74: Reibführungssperrklinke

Pos. 75: Keil-Hubstangenvorrichtung

Pos. 76: Zugfeder oder Stoßdämpfer

Pos. 77: Sperrmulde

## Ansprüche

1. Die Konstruktion der Ernte-Support-Serie als solche einheitlich nebst erforderlicher Ernte-Klappenkassette gekennzeichnet durch:
die beiden frei kreisbaren Vorderräder in vertikaler Achse (5), den dreiecks- oder trapezförmigen Aufbauten (6, 53), die jeweils eine oder zwei Personen aufnehmen können - und vom einfachen Grundmodell (Fig. 3) abgesehen - durch den getrennten Antrieb der beiden Hinterräder (20), die zusammen die Drehzahldifferenz-Lenkung ermöglichen, durch den Elektroantrieb der unterstützungsweise vom aus- und ein-rollbaren Sonnenzellendach gespeist (7, 8, 9, 10) wird, und die jeweils speziellen hauptsächlich schwerkraftspezifischen Zu- und Abfuhrvorrichtungen, die es generell erlauben die Erntegutbehälter vorne aufzunehmen und hinten gefüllt abzugeben:

2. Die ES-Konstruktion nach Anspruch 1 mit dem einfach kombinierten Auf- und Abzug, gekennzeichnet durch: zwei Liftsupporte (12) mit Stützführung (17), die mit doppelter Seilbahn (13) verbunden sind -die beiden Seilbahnen durchgehend verbunden oder in Federtrommeln (18, 19) mündend.

3. Die ES-Konstruktion nach Anspruch 1 mit dem ausfahrbaren Seilabtrieb gekennzeichnet durch: Seiltrommel mit Einholfedertrieb (21), Durchlaufsperre (Fig. 5) mit drehfedergehemmter Bremsrolle (23) den dazugehörigen Ernte-Klappenkassetten (Fig. 1, 2) mit federkraftregulierenden Seitenwandöffnungen (16), mit Stoffband und Schaumgummiausfüllung (2), Zweiwegdoppelkarabiner (3) mit zwei voneinander abgeteilten Karabinerhaken und Blattfedersicherung (4) für einfaches Ein- und Ausklinken, der Seilbahnklammer (Fig. 6) für Seilanschluß.

4. Die Konstruktion nach Anspruch 1 mit den um 180° schwenkbaren Drucklauf-Förderband gekennzeichnet durch: den zwei einstellbaren Kassettenführungen (Fig. 7) an der hinteren Supportkonsole, den am Fahrzeug geführten Arm (43) auf dem das Förderband drehbar lagert, den zwei Federhalterungen (44), die Unterbrecher-Schaltleitung (42) unterhalb des Laufbandes, das nur auf Druckbelastung Kontakt gibt, den Schwenkbügel mit Rolle (47) und das Stützrad (46).

5. Die Konstruktion nach Anspruch 1 mit dem doppelt kombinierten Auf und Abzug, gekennzeichnet durch: die zwei Seilbahnen, die den vollständig vorderseits angeordneten Hubmechanismus in drei Liftbahnen (48, 49) ergeben, wobei die mittlere Supportkonsole lose geführt ist und von den beiden Seilbahnen über einen Mitnehmerkeil bewegt wird.

6. Die Ernte-Support-Konstruktion nach Anspruch 1 mit dem Schachthub-Mechanismus für Großkisten, gekennzeichnet durch: die einziehbare Gleitflächendeichsel (72), den Hebebock (67) mit Federhemmplatte (71) an der hinteren Achse, zwei querverbundene Reibführungssperrklinkenpaare (74) an den unteren vier Gestängeschenkeln, ein auf der oberen Achse jeweils links und rechts außen lagerndes Pendel-Rollensupport (65) mit hydraulischer Winkelrohrhemmung (68) und der Entsperrudersonde seitlich der Mitte (69) zur Auslösung der gehemmten Federhubenergie über die Keil-HubstangenVorrichtung (75); die mit den unteren Hebebockschenkeln kreuzenden beiden Führungswinkeln (70) an die jeweils ein Zugfeder- oder Stoßdämpferpaar (76) angebracht ist und mit den Hebebockschenkeln unten verbunden sind - weiters beidseitig mit Führungsflächen und mit Sperrmuldenmündung (77) für die Reibführungssperrklinken (74) versehen. Die Förderhilfen bestehend aus den beiden zweifachverstellbaren Ernte-Becherförderwerken (56) und den beiden Obstschächten (60) mit stoppbarem spiralfederregulierenden Schacht-Senkboden (61), den verlängerbaren Schachtbrükken (62), den Endlappen (63) und den jeweils zwei Führungspuffer (64) für die Großkisten.

Geänderte Patentansprüche gemäss Regel 86(2) EPÜ

1. Fahrzeug, gekennzeichnet durch Doppelantrieb bzw. mit Doppelantriebslenkung, wobei ein paar Antriebsräder auf jeweils einer ungelenkten Welle lagern und unabhängig voneinander angetrieben werden und die restlichen antriebslosen Räderpaare frei um die vertikale Achse drehbar sind.

2. Fahrzeug nach Anspruch 1 unmotorisiert, als Ernte-Support für den modernen Obstbau, gekennzeichnet durch den Aufbau in Schubladenprinzip, wo die Erntekassetten und Ernteklappenkassetten in den seitlichen Öffnungen wie Schubladen angesteckt, hinein- und herausgeschoben werden können. (Fig 3)

3. Fahrzeug nach Anspruch 1 und der ausfahrbare Seilabtrieb, gekennzeichnet durch: ......

4. Fahrzeug nach Anspruch 1 und das um 180° schenkbare Drucklauf-Förderband, .....

5. Fahrzeug nach Anspruch 1 und der doppelt kombinierte Auf- und Abzug, .....

6. Fahrzeug nach Anspruch 1 und der Schachthubmechanismus für Großkisten, .....

Fig.1

Fig. 2

Fig. 3

Fig. 4

Fig. 5

Fig. 6

Fig. 7

Fig.7

Fig.8

16

43

45

41

44

40

42

46

16

47

39

Fig. 9

Fig. 10

Fig. 11

EP 0 363 511 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3568796 (STANHOPE) <br> * Spalte 2, Zeile 63 – Spalte 5, Zeile 4; Figuren 1-15 * <br> --- | 1, 2 | A01D46/24 |
| A | US-A-2448630 (SCHUTZ) <br> * das ganze Dokument * <br> --- | 1, 2 | |
| A | EP-A-221287 (LICENTIA PATENT-VERWALTUNGS-GMBH) <br> * Spalte 1, Zeile 20 – Zeile 24 * <br> * Spalte 2, Zeile 17 – Zeile 21; Ansprüche 1, 5, 15; Figur 2 * <br> --- | 1 | |
| A | FR-A-2376613 (PINIAC) <br> * Seite 3, Zeile 1 – Seite 4, Zeile 18; Figur PLI/3 * <br> --- | 1 | |
| A | FR-A-2550049 (PIERROT) <br> * Seite 1, Zeile 1 – Seite 3, Zeile 4; Figuren 1-4 * <br> --- | 1 | |
| A | FR-A-2049588 (TRICHARD) <br> * Seite 4, Zeile 6 – Seite 6, Zeile 9; Figuren 3-6 * <br> ----- | 1 | **RECHERCHIERTE SACHGEBIETE (Int. Cl.5 )** <br><br> A01D |

Der vorliegende Recherchenbericht wurde für alle Patentansprüche erstellt

| Recherchenort | Abschlußdatum der Recherche | Prüfer |
|---|---|---|
| DEN HAAG | 15 JUNI 1989 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)